# EUROPEAN PATENT APPLICATION

(11) **EP 0 743 540 A2**
(43) Date of publication of application: **20.11.1996**
(21) Application number: 96830221.6
(22) Date of filing: 18.04.1996
(51) Int. Cl.: G01V 3/12

(54) **System for detecting the presence of foreign objects inside robbery-prevention security antechambers**

(30) Priority: 28.04.1995 IT FI950087
(71) Applicant: SAIMA SICUREZZA S.p.A., 52020 Arezzo (IT)
(72) Inventor: Rinaldi, Rinaldo, 52040 Civitella in Val di Chiana, Arezzo (IT)
(74) Representative: Bardini, Marco Luigi

(57) **Abstract**

A system for detecting the presence of foreign objects inside robbery-prevention security antechambers comprising a plurality of radio-frequency emitting elements (TXN) associated with a plurality of receiving units (RXN), means (ABIL 1, ABIL 2) for sequentially enabling the emitting units and for carrying out the scanning of the signal received by said receiving units during each enabling of the transmitting units as well as means for storing (MEM) all the configurations of the signals received by said receiving units. The system also comprises means (CPU) for carrying out the above-mentioned operations both before and after the passage of a person and for detecting disturbances in the distribution of the electromagnetic field produced by said emitting units and received by said receiving units by carrying out a comparison between the data stored before and after the passage of a person as well as means, for activating an alarm on the basis of the results of the comparison.

## Description

The present invention relates to a system for detecting the presence of foreign objects inside security antechambers commonly used in banks as well as similar installations, such as passages controlled with interlocking doors, used to control access to protected environments.

The problem of the introduction of "foreign" objects into security antechambers is well known to those who work in the field of security systems.

The systems used to resolve the problem of detecting the presence of foreign objects left inside security antechambers when a person subjected to checking is not present are based on weighing and optical systems as well as, more recently, ultrasonic systems.

These known systems have proven not to be sufficiently safe and can be circumvented by ill-intentioned individuals, or are subject to uncontrollable external parameters such as temperature and humidity, the latter being particularly important for ultrasonic systems.

The object of the present invention is to provide a system of the above-mentioned type which makes it possible to eliminate the inconveniences related to systems according to previous technology.

According to the present invention, an arrangement of a plurality of radio-frequency emitting units associated with a plurality of receiving units is provided for along with the detection of variations in the field of standing waves set up by the plurality of emitting units before and after the passage of a person, detecting disturbances in the field of standing waves induced by the presence of both metallic and non metallic (dielectric) foreign objects inside the security antechamber under control.

The invention will now become apparent in the following description of one of its currently preferred embodiments, given as a not limitative example, with reference to the attached drawings in which:
- figure 1 is a schematic view of a robbery-prevention security antechamber using the system according to the present invention;
- figure 2 shows an example of a field of standing waves inside a room such as a security antechamber;
- figure 3 is a schematic view of an arrangement of radio-frequency emitters and receivers according to the invention, and
- figure 4 is a schematic view of a circuit arrangement according to the present invention.

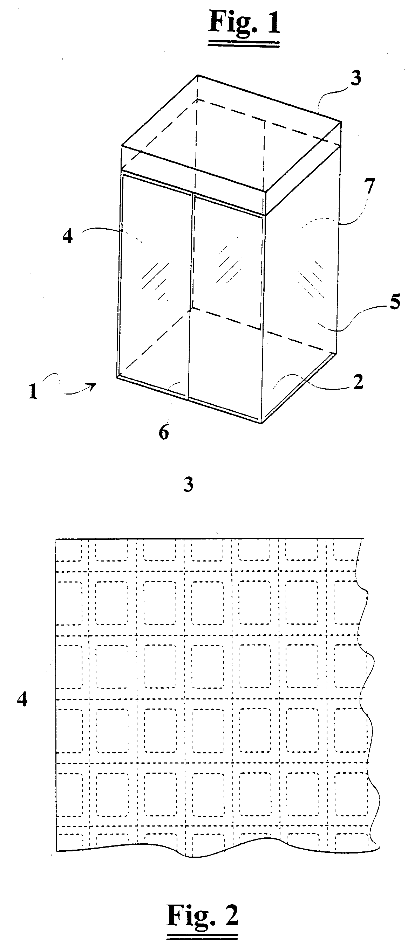

With reference to the attached drawings, and in particular to figure 1, a typical security antechamber is shown, indicated as a whole with 1, having a floor 2, ceiling 3, side walls 4,5 and entrance/exit doors 6,7. The six walls of antechamber 1 are preferably made of electrically conductive material, meaning, in a broad sense, material reflecting microwaves such as those in the range of 10GHz. Therefore, falling into this category are materials such as metalized glass or glass comprising wire netting having an electrically short pitch with respect to the wavelength, corresponding, for example, to the band of 10GHz. (For f = 10GHz, λ≅ 3 cm).

The active part of the system according to the invention is housed in ceiling 3 of the security antechamber. The ceiling is, for obvious reasons, the most convenient place for the active part, but this should not be considered limitative.

If one considers the portion of space defined by the six walls of the antechamber, made as described above with electrically conductive material, an higher order mode reasonant cavity is defined (frequency greater than the fundamental frequency), to which corresponds, for example, a field distribution of the type illustrated, for the sake of clarity, in two dimensions in figure 2.

The distribution of the field lines of force is given by the solutions of the wave equations that describe the distribution of the electromagnetic field in a cavity, which depend in a well-known way, on the actual frequency, the geometric dimensions of the cavity, the dielectric constant of the medium filling the cavity and the magnetic permeability of the medium filling the cavity.

Once the boundary conditions, as defined by the working frequency and the geometric dimensions of the security antechamber, have been established, in the same dielectric medium (air), the presence of any object with dimensions comparable to or greater than a fraction of the wavelength (i.e. a few centimeters) will modify the distribution of the electromagnetic field, modifying the geometry of the lines of force of the electric and magnetic fields. A modification of the situation produced by the presence of a conductive or non conductive foreign body, left inside the antechamber by a person traveling through it, constitutes, wherever the object is left, a disturbance which can be detected by analyzing the distribution of the electromagnetic field after the passage of a person in comparison with the distribution of the electromagnetic field before the passage of a person. At this point, an alarm signal can be activated to respond to the situation.

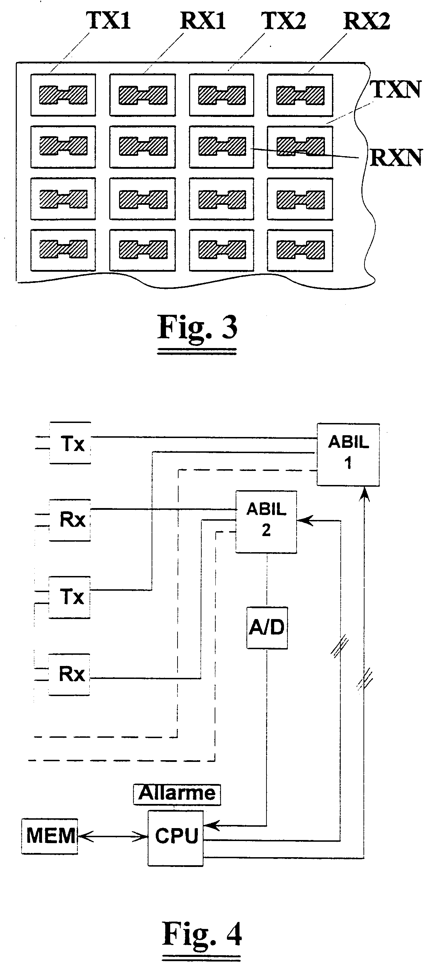

Figure 3 is a schematic view of an arrangement of the excitation and detection of the distribution of the electromagnetic field. As shown in figure 3, a plurality of radio-frequency energy emitters TX1, TX2, .... TXN is provided for as well as a plurality of receivers RX1, RX2, .... RXN constituted of strip-line dipoles according to well-known technology. The transmitters can be constituted of dielectric resonator X-band oscillators, and receivers constituted of a simple detection diode. An important feature of the transmitters is that they have an adequate spectral purity so that the distribution of the electromagnetic field inside the cavity described above is coherent at least for the time necessary to perform a measurement (i.e. a few seconds). With the sequential enabling of the TX's and a scanning of all the RX's for each enabling of the TX's, it is possible to "photograph" the distribution of the electromagnetic field and identify possible disturbances provoked by objects left inside the security antechamber. The presence of various, geometrically separate TX's will cause the set-up of different distributions of the electromagnetic field inside the cavity constituted by the antechamber, preventing in this way the generation of "blind spots" or new configurations of the electromagnetic field congruent with that in the absence of objects which could cause failed alarms.

In figure 4, a circuit arrangement according to the present invention is shown. With reference to this figure, a CPU, through a circuit ABIL 1, sequentially enables the various TX's. During the enabling of a generic TX, the CPU, through circuit ABIL 2, carries Put a scanning of the several RX's. The signal values originating from the various RX's after analog-to-digital conversion in A/D are stored in a MEM memory. This operation is repeated for each TX and the values of the field are stored. These operations are carried out before and after the passage of a person. The CPU carries out a comparison of the data read before and after the passage of a person. If the data do not correspond or, that is, the distribution of the electromagnetic field is different after the passage of a person, an object has been left inside the antechamber and an alarm can be activated to respond to the situation. The comparison process may be a simple X-OR operation on the digitized values of the received signals before and after the passage of a person.

The program housed in the CPU can be a conventional "rigid" program or algorithms of the "fuzzy logic" type could be implemented in order to decrease the probability of false alarms in the presence of insignificant disturbances of the electromagnetic field.

Variations and/or modifications can be brought to the system for detecting the presence of foreign objects according to the present invention without departing from the scope of the invention itself.

## Claims

1. A system for detecting the presence of foreign objects inside of robbery-prevention security antechambers, characterized in that it comprises a plurality of radio-frequency emitting units (TX1,...TXN) associated with a plurality of receiving units (RX1,...RXN) means (ABIL 1, ABIL 2) for sequentially enabling said emitting units and for carrying out a scanning of the signal received by said receiving units during each enabling of the transmitting units as well as means (MEM) for storing all the configurations of the signals received by said receiving units, means (CPU) for carrying out the above-mentioned operations before and after the passage of a person and for detecting disturbances of the distribution of the electromagnetic field produced by said emitting units and received by said receiving units by carrying out a comparison between the data stored before and after the passage of a person and, depending on the results on the comparison, activating an alarm.

2. A system according to claim 1, characterized by the fact that the inside of said security antechamber (1) is realized in such a way as to constitute a resonant cavity having a mode of an order greater than the characteristic fundamental frequency.

3. A system according to claims 1 and 2, characterized by the fact that said emitting and receiving units are made to operate on frequencies corresponding to wavelengths of a few centimeters.

4. A system according to claim 3, characterized by the fact that said emitting and receiving units are constituted of dipoles associated respectively with dielectric resonator oscillators and detector diodes.

5. A system according to any of the previous claims, characterized by the fact that the sequential enabling of said emitting and receiving units, and the storage and comparison of the distributions of the electromagnetic field inside said antechamber are carried out under the control of a programmed computer (CPU).

6. A system according to claim 5, characterized in that said comparison comprises an X-OR operation between digitized stored signals.

7. A system according to claim 5, characterized by the fact that the programming of said computer implements algorithms of the "fuzzy logic" type.
